# EUROPÄISCHE PATENTSCHRIFT

(11) **EP 0 600 319 B1**
(45) Veröffentlichungstag und Bekanntmachung des Hinweises auf die Patenterteilung: **16.08.1995**
(21) Anmeldenummer: 93118607.6
(22) Anmeldetag: 18.11.1993
(51) Int. Cl.: E02B 9/06

(54) **Verfahren zur Herstellung eines Wasserdurchlaufes durch eine Sperrenbauwerk, insbesondere aus Beton, unter anstehendem Wasserdruck**
Method of constructing a water conduit through a barrier, in particular from concrete, under water pressure
Méthode de construction d'une conduite d'eau à travers un barrage, en particulier de béton, sous pression d'eau

(30) Priorität: 03.12.1992 DE 4240745
(43) Veröffentlichungstag der Anmeldung: 08.06.1994
(73) Patentinhaber: RHEIN-MAIN-DONAU AG, 80802 München (DE)
(72) Erfinder: Schroeder, Albert, Dipl.-Ing., D-85614 Kirchseeon (DE)
(74) Vertreter: Eder, Eugen, Dipl.-Ing.

(56) Entgegenhaltungen:
- FR-A- 1 419 840
- PATENT ABSTRACTS OF JAPAN vol. 9, no. 18 (M-353)(1741) 25. Januar 1985 & JP-A-59 165 712 (SHIMIZU KENSETSU K.K.) 19. September 1984

## Beschreibung

Die Erfindung betrifft ein Verfahren zur Herstellung eines Wasserdurchlaufes durch ein Sperrenbauwerk, insbesondere aus Beton, unter anstehendem Wasserdruck mit den Merkmalen des Oberbegriffs des Patentanspruches 1.

Es ist bekannt, einen Wasserdurchlauf durch ein Sperrenbauwerk aus Beton oder Mauerwerk dadurch zu erstellen, daß an der Oberwasserseite eine Trockenlegung erfolgt, sei es durch Entleeren des Sperreninhaltes oder durch entsprechende Verbaumaßnahmen, um den Wasserdruck von dem zu erstellenden Wasserdurchlauf, z.B. einem Stollen, abzuhalten. Die Trockenlegung und die Verbaumaßnahmen sind zeitraubende und teure Maßnahmen und sind sehr oft nicht durchführbar.

Aus der FR-A-1 419 840 ist ein gattungsgemäßes Verfahren bekannt, wobei die Strecke des Sicherheitsabstandes durch Sprengung beseitigt wird. Eine solche Erstellung eines Stollens für einen Wasserdurchlauf ist nicht ungefährlich, da keine Sicherheit gegen einen ungewollten Wassereinbruch gegeben ist.

Der Erfindung liegt die Aufgabe zugrunde, ein Verfahren zu schaffen, das es ermöglicht, einen Wasserdurchlauf durch ein Sperrenbauwerk ohne Trockenlegung oder Verbaumaßnahme unter größtmöglicher Sicherheit zu erstellen.

Die Erfindung löst diese Aufgabe mit den Merkmalen des Kennzeichens des Patentanspruches 1.

Die Erfindung bietet den Vorteil, daß ohne Trockenlegung oder Verbaumaßnahmen aber bei größter Sicherheit der Wasserdurchlauf durch das Sperrenbauwerk erstellt werden kann.

Weitere Ausgestaltungen der Erfindung ergeben sich aus den Unteransprüchen.

Die Erfindung wird nachfolgend anhand eines in der Zeichnung dargestellten Ausführungsbeispiels näher erläutert.

In der Zeichnung zeigen:

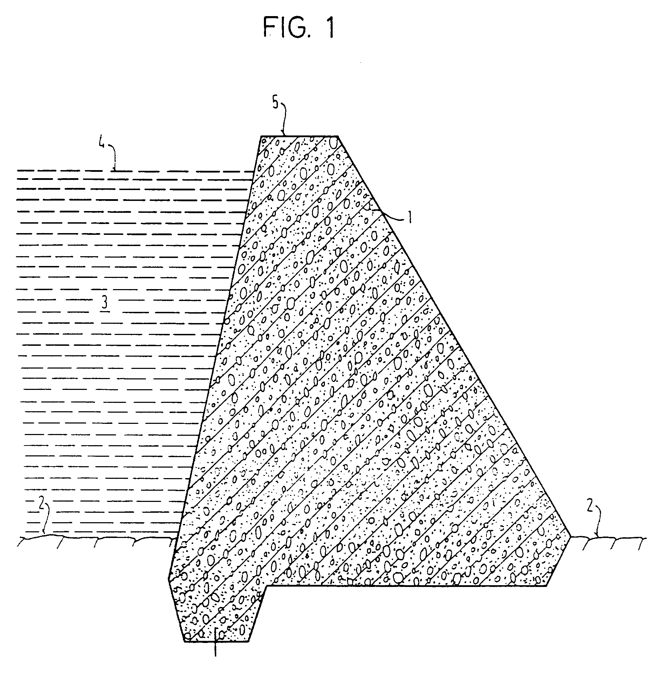

- Fig. 1: einen schematischen Querschnitt von dem Sperrbauwerk ohne Wasserdurchlauf;
- Fig. 2: einen schematischen Querschnitt wie in Fig. 1 mit Hilfsgerüst unter Wasser als Vorbereitung des Erstellens des Wasserdurchlaufs;

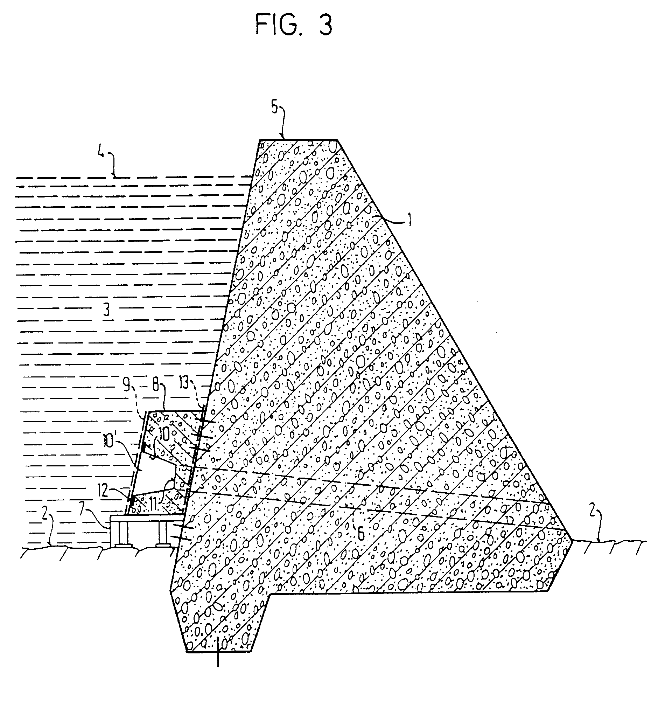

- Fig. 3: einen Querschnitt wie in Fig. 2 mit Betonvorsatzschale;
- Fig. 4: einen Querschnitt wie in Fig. 3 mit aufgebrachtem Deckel;

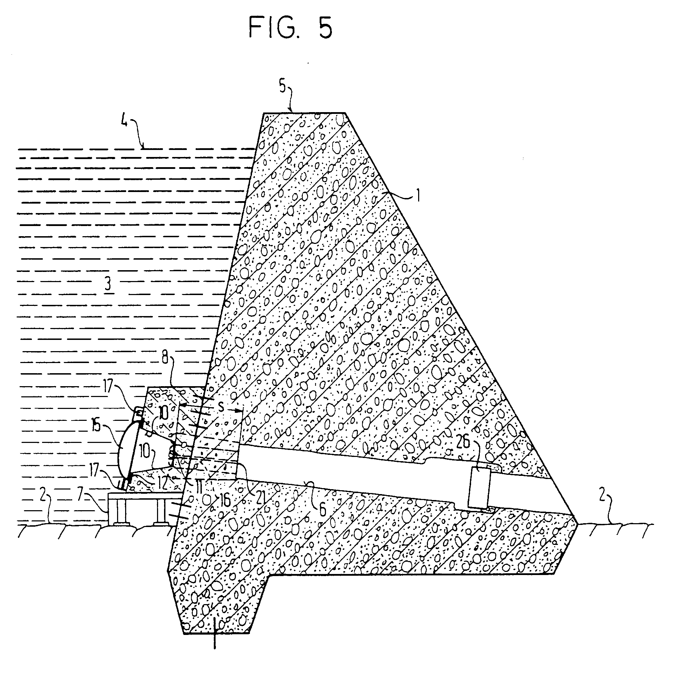

- Fig. 5: einen Querschnitt wie in Fig. 4 mit teilweise ausgebrochenem Rohrstollen, eingebauter temporärer Sicherheitstür und Injektionsbohrungen im Bereich des noch auszubrechenden Stollens;

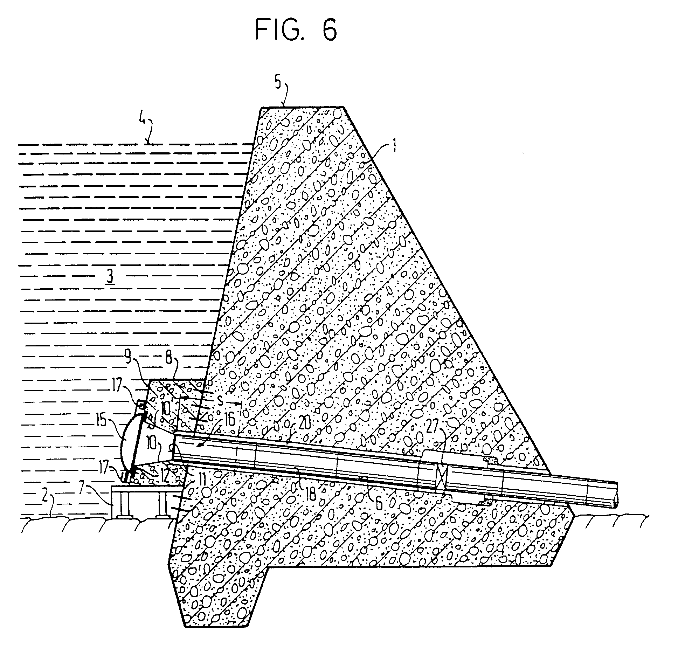

- Fig. 6: einen Querschnitt wie in Fig. 5 mit fertiggestelltem Wasserdurchlauf.

Das Sperrenbauwerk 1 besteht Z.B. aus Mauerwerk oder Beton. Es ist fest im Boden 2 gegründet.

An der Oberwasserseite des Sperrenbauwerks 1 befindet sich das angestaute Wasser 3. Der Wasserspiegel 4 kann bis zur Krone 5 des Sperrenbauwerkes 1 stehen.

Die Unterwasserseite bzw. Luftseite ist ohne Wasser.

Ein solches Sperrenbauwerk 1 kann z.B. den Staudamm eines Speichersees bilden. Auch andere Verwendungen sind möglich.

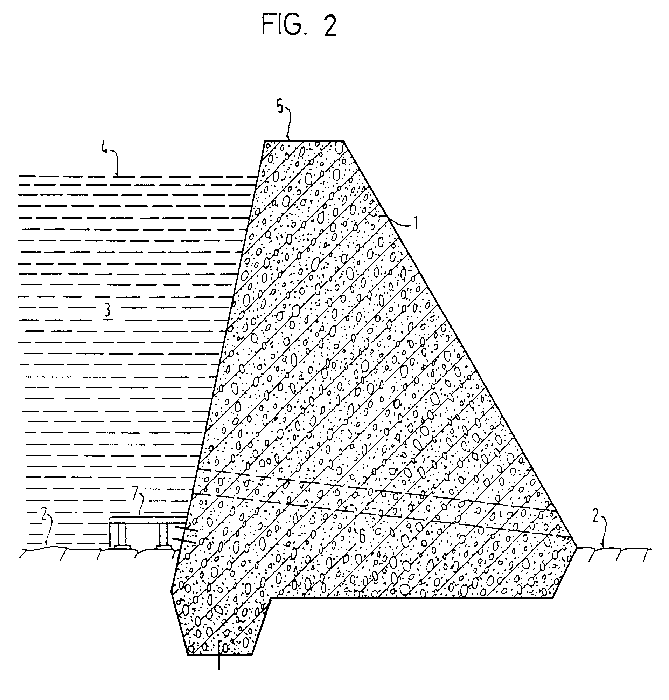

Das Sperrenbauwerk 1 kann nach Fig. 2 in der strichlierten oder in beliebiger anderer Lage einen Wasserdurchlauf 6 erhalten. Ein solcher Wasserdurchlauf 6 kann z.B. nachträglich als Triebwasserstollen für ein Wasserkraftwerk, als Grundablaß oder für andere Verwendungszwecke geeignet sein.

Üblicherweise erhält dieser Stollen eine Stahlpanzerung oder sonstige drucksichere dichte Auskleidung.

Zunächst wird an der Oberwasserseite, wie aus Fig. 2 ersichtlich, ein Hilfsgerüst 7 mit vorbereiteten Ankerplatten unter Wasser einbetoniert. Hierfür wird eine Schalung verwendet, die entweder als verbleibende Stahlkastenschalung mit sonstigen vorgefertigten verbleibenden Schalelementen, oder als temporäre Schalung ausgebildet ist, die wieder entfernt wird. Die Schalung kann sich am Boden 2 abstützen. Sie kann am Sperrenbauwerk 1 verankert werden.

Um ggf. Unebenheiten am Sperrenbauwerk 1 auszugleichen, wird eine Betonvorsatzschale 8 erstellt, die sich auf das Hilfsgerüst 7 gründet und mit dem Sperrenbauwerk 1 verdübelt sein kann.

In diese Betonvorsatzschale 8 wird ein Auflagering 12 miteinbetoniert, an dem bereits ein Teil des späteren Einlaufs 10' angefügt sein kann. Die Betonvorsatzschale 8 kann mittels einer Schalung 9 auf der Oberwasserseite hergestellt werden, welche wieder entfernt werden kann, oder im Bauwerk verbleiben kann. Zur Oberwasserseite ist der Einlauf offen und ein späterer Rechen kann bereits vorher miteingebaut sein.

Zur Unterwasserseite hin ist der Rohrstutzen mit einem Hilfsdeckel 11 verschlossen, um das Einfließen von Beton in den Rohrstutzen 10 zu verhindern.
Der trompetenförmige Rohrstutzen 10 mit dem Auflagering 12 kann auf dem Hilfsgerüst 7 aufgestellt und ausgerichtet werden.

In der Kontaktfuge zwischen Betonvorsatzschale 8 und Sperrenbauwerk 1 können Abdichtmittel, z.B. auch zusätzliche Verpreßschläuche 13 angeordnet werden.

Die Vorsatzschale 8 kann mit dem Sperrenbauwerk 1 verdübelt werden.

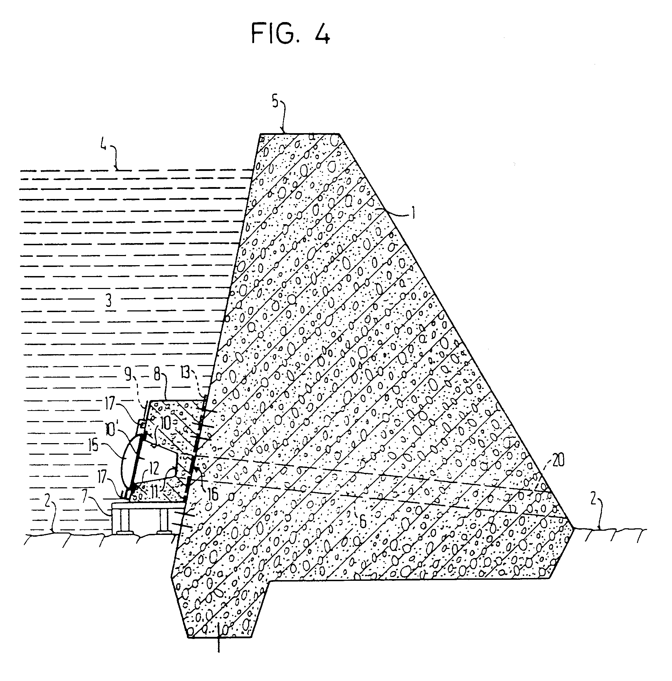

Auf den Auflagering 12 wird nach Fig. 4 ein Deckel 15 aufgebracht. Er ist so ausgebildet, daß er dem auftretenden Wasserdruck standhält und gegenüber dem zu schaffenden Wasserdurchfluß 6 mittels einer Dichtung abgedichtet werden kann.

Der Deckel 15 kann als temporärer Verschlußdeckel für die Bauzeit aber auch zur späteren Verwendung als Revisionsverschluß verwendbar sein.

Der Deckel 15 ist vorzugsweise als geschlossener Hohlkörper ausgebildet, wodurch das Gewicht des aus Stahl bestehenden Dekkels 15 durch den erzeugten Auftriebskörper reduziert wird. Der erforderliche Auftrieb ist mit dem Gewicht des Deckels so abzustimmen, daß der Deckel 15 im Wasser gerade absinkt.

Der Deckel 15 wird auf die Schienen 17 eingehängt und während der Erstellung des Wasserdurchflusses 6 an den Einlauf angepreßt. Bei der Herstellung von mehreren geometrischen und höhengleichen Einläufen kann der Deckel 15 auch vor die anderen Einläufe 16 von Wasserdurchflüssen 6 verfahren werden.

Hierfür kann der Deckel 15 als "Kulissenschieber" konstruiert werden, der an zwei Schienen 17 oben und unten geführt ist. Die Schienen 17 können vorzugsweise mit in die Betonvorsatzschale 8 einbetoniert werden. Sie können aber auch nachträglich angebracht werden.

Der Deckel 15 kann aber auch schräg oder vertikal verfahren werden, oder wieder ganz entfernt werden.

Nach Fertigstellung des oder der Einläufe, kann der Deckel in eine Lagerposition mittels der Schienen 17 neben den, oder zwischen oder neben die Einläufe verfahren werden und an der Wand fixiert werden.

Für Not- oder betriebliche Revisionsfälle des Durchlasses kann der Deckel 15 wieder vor den entsprechenden Einlauf verfahren werden. Für Revisionsfälle des Deckels selbst, z.B. der Dichtung, kann der Deckel 15 ausgehängt und an die Oberfläche geschwommen werden.

Für die Erstellung eines Wasserdurchlaufes 6 wird ein Stollen 20 von der Unterwasserseite her in das Sperrenbauwerk 1 getrieben. Der Stollenzugang liegt üblicherweise unterwasserseits nahe dem Boden 2. Er verläuft vorzugsweise schräg nach aufwärts, die Lage ist jedoch beliebig.

Der Stollen 20 wird bis zu einem Sicherheitsabstand s vorgetrieben, den die Stollenbrust 21 vom Hilfsdeckel 11 der Betonvorsatzschale besitzt. Ein Wasserdurchbruch wird durch den Sicherheitsabstand s ausgeschlossen.

Zur Erfüllung der Talsperrenverordnung kann im Stollen eine temporäre Sicherheitstür 26 eingebaut werden, üblicherweise aus Stahl.

Bei Deckellage 15 in Schließstellung vor dem Einlauf 16 wird von der Stollenbrust 21 im Stollen eine Ziel-, Entlastungs- und Kontrollbohrung bis zum Hilfsdeckel 11 erstellt. Die Bohrung endet am Hilfsdeckel und soll die Fuge zwischen Hilfsdeckel und Beton sowie die Fuge zwischen Vorsatzschale 8 und Sperrenbauwerk 5 vom Wasserdruck entspannen. Damit wird sichergestellt, daß die Vorsatzschale 8 vom oberwasserseitigen Wasserdruck gegen das Sperrenbauwerk 5 gedrückt wird.

Um zu verhindern, daß der Hilfsdeckel 11 bereits durchstoßen wird und um die Fuge zwischen Hilfsdeckel 11 und dem anschließenden Beton wirksam zu dränieren, kann vor dem Einbetonieren von der Vorsatzschale 8 ein Dränagepolster am Hilfsdeckel 11 angebracht werden. Um den Deckel 15 an den Einlauf anzupressen, muß der Innenraum des Rohrstutzens 10 gelenzt werden.

Dies kann durch den Deckel 15 hindurch geschehen, oder vom Rohrstutzen 10 seitlich am Einlauf vorbei zur Oberwasserseite oder auch zur Unterwasserseite durch den Hilfsdeckel 11. Zur gleichen Zeit wie der Hohlraum im Rohrstutzen 10 gelenzt, d.h. entleert wird, muß Luft angesaugt werden durch eigene Zuluftleitungen.

Sobald eine Wasserdruckdifferenz erzeugt ist, wird der Deckel 15 vor den Einlauf auf den Auflagering 12 gepreßt.

Um während des Restausbruchs unkontrollierte Wassereinbrüche zu verhindern, können tangential um den auszubrechenden Querschnitt 16 Injektionsbohrungen angebracht werden und geeignete Verpreßmaßnahmen durchgeführt werden.

Sowohl die ausgeführte Ziel-, Entlastungs- und Kontrollbohrung als auch die Injektionsbohrungen können mit vorher angeklebten Sicherheitsschiebern durchgeführt werden, um bei zu hohem Wasserandrang im Bohrloch eine Zwischenverpreßung mittels des Schiebers vornehmen zu können.

Nach Herstellung des restlichen Stollenausbruchs wird der Hilfsdeckel entfernt und die Stollenauskleidung vorzugsweise mittels Stahlpanzerrohren 18 hergestellt. Der Ringraum 16 zwischen den Panzerrohren und dem Sperrenbauwerk wird dicht verpreßt.

Vorzugsweise oberhalb der Sicherheitstür 26 baut man in die Rohrleitung ein Verschlußorgan 27 ein. Nach dessen Betriebsfähigkeit kann dann die Sicherheitstür 26 ausgebaut werden.

Die Rohrverbindung zur Unterwasserseite kann fertig hergestellt werden.

## Patentansprüche

1. Verfahren zur Herstellung eines Wasserdurchlaufs durch ein Sperrenbauwerk, insbesondere aus Beton oder Mauerwerk, unter anstehendem Wasserdruck,
bei dem von der Unterwasserseite bzw. Luftseite her ein Stollen (20) durch das Sperrenbauwerk (1) bis zu einem einen Wasserdurchbruch ausschließenden Sicherheitsabstand (s) zur Wand an der Oberwasserseite des Sperrenbauwerks erstellt wird,
dadurch gekennzeichnet,
daß ein Deckel (15) als Abdichtung an der gedachten, den Wassereinlauf bildenden Ausmündung des Stollens (20) an der Wand an der Oberwasserseite des Sperrenbauwerks (1) vor oder bei Erreichen des Sicherheitsabstands (s) dichtend angebracht und in seinem Randbereich gegenüber der Wand des Sperrenbauwerkes (1) abgedichtet wird,
der Stollen (20) bis zum Deckel (15) weiter hergestellt wird und
bei dem der Deckel (15) zur Wassereinleitung wieder vom Wassereinlauf entfernt wird.

2. Verfahren nach Anspruch 1,
dadurch gekennzeichnet,
daß mit Sicherheitsabstand vom Stollenende (21) bis zum Deckel (15) zunächst wenigstens eine Entlastungsbohrung erstellt wird, wodurch die abgedichtete Deckelrückseite mit dem Luftdruck an der Unterwasserseite bzw. Luftseite in Verbindung gesetzt wird.

3. Verfahren nach Anspruch 2,
dadurch gekennzeichnet,
daß die Stollenbrust (21) des auszubrechenden Stollens mit Sicherheitsabstand (s) bis zum Deckel (15) unter Injektion von erhärtendem Baustoff in die umgebende Stollenwand gesichert wird.

4. Verfahren nach Anspruch 1,
dadurch gekennzeichnet,
daß für die Anbringung des Deckels (15) am Sperrenbauwerk (1) eine Betonvorsatzschale (8) mit vorbereitetem Auflagering (12) erstellt und abgedichtet wird.

5. Verfahren nach Anspruch 4,
dadurch gekennzeichnet,
daß die Betonvorsatzschale (8) anschließend an den Auflagering (12) für den Deckel (15) mit einer Ausnehmung versehen wird.

6. Verfahren nach Anspruch 4 oder 5,
dadurch gekennzeichnet,
daß zum Ausrichten des Auflageringes (12) für den Deckel (15) ein Hilfsgerüst (7) erstellt wird.

7. Verfahren nach Anspruch 1,
dadurch gekennzeichnet,
daß der Deckel (15) von einer Dichtstellung in eine Ruhestellung verschoben wird und umgekehrt.

8. Verfahren nach Anspruch 7,
dadurch gekennzeichnet,
daß der Deckel (15) nach der Erstellung des Stollens (20) durch das Sperrenbauwerk (1) als Revisions- oder Notverschluß verwendet wird.

9. Verfahren nach Anspruch 1,
dadurch gekennzeichnet,
daß in den Stollen (20) nahe seiner Unterwasserseite eine Sicherheitstür (26) eingebaut wird.

10. Verfahren nach Anspruch 5,
dadurch gekennzeichnet,
daß die Ausnehmung in der Betonvorsatzschale (8) durch einen Rohrstutzen (10) als verlorene Schalung gebildet wird.

11. Verfahren nach Anspruch 10,
dadurch gekennzeichnet,
daß der Rohrstutzen (10) aus Stahl als Panzerung für die spätere Triebwasserleitung verwendet wird.

12. Verfahren nach Anspruch 10 oder 11,
dadurch gekennzeichnet,
daß die vom Rohrstutzen (10) gebildete Schalung zum Deckel (15) hin offen und zur Unterwasserseite hin mit einem Boden geschlossen ist.

13. Verfahren nach Anspruch 12,
dadurch gekennzeichnet,
daß der Innenraum des Rohrstutzens (10) vor Durchbrechung des Rohrstutzenbodens gelenzt wird.

14. Verfahren nach Anspruch 1,
dadurch gekennzeichnet,
daß in den ausgebrochenen Stollen (20) eine dichte Stahlpanzerung eingebaut wird.

15. Verfahren nach Anspruch 14,
dadurch gekennzeichnet,
daß die Stahlpanzerung mittels Ringraumverpressung kraftschlüssig in den Stollen (20) eingebaut wird.

## Claims

1. Process for producing a water conduit through a barrier, in particular consisting of concrete or masonrywork, under water pressure, in the case of which a tunnel (20) is made through the barrier (1), from the tail-water side or airside, up to a safety distance (s), which rules out the penetration of water, from the wall on the head-water side of the barrier, characterized in that a cover (15) is fitted in a sealing manner as a seal on the imaginary opening, which forms the water inflow, of the tunnel (20) at the wall on the head-water side of the barrier (1) before reaching, or upon reaching, the safety distance (s) and is sealed in its border region with respect to the wall of the barrier (1), the tunnel (20) is continued further as far as the cover (15), and in which the cover (15) is removed again from the water inflow for the introduction of water.

2. Process according to Claim 1, characterized in that first of all at least one relief bore is made at the safety distance from the tunnel end (21) as far as the cover (15), as a result of which the sealed cover rear side is brought into connection with the air pressure on the tail-water side or airside.

3. Process according to Claim 2, characterized in that the tunnel face (21) of the tunnel which is to be excavated is secured at the safety distance (s) as far as the cover (15) with the injection of a setting construction material into the surrounding tunnel wall.

4. Process according to Claim 1, characterized in that, for fitting the cover (15) on the barrier (1), a concrete facing shell (8) with a ready prepared attachment ring (12) is produced and sealed.

5. Process according to Claim 4, characterized in that the concrete facing shell (8) is provided with a clearance adjoining the attachment ring (12) for the cover (15).

6. Process according to Claim 4 or 5, characterized in that shoring (7) is made in order to align the attachment ring (12) for the cover (15).

7. Process according to Claim 1, characterized in that the cover (15) is displaced from a sealing position into a rest position and vice versa.

8. Process according to Claim 7, characterized in that, after the tunnel (20) has been made through the barrier (1), the cover (15) is used as an inspection or emergency closure means.

9. Process according to Claim 1, characterized in that a safety door (26) is installed in the tunnel (20), near its tail-water side.

10. Process according to Claim 5, characterized in that the clearance in the concrete facing shell (8) is formed by a pipe stub (10) as permanent shuttering.

11. Process according to Claim 10, characterized in that the steel pipe stub (10) is used as armouring for the subsequent power conduit.

12. Process according to Claim 10 or 11, characterized in that the shuttering formed by the pipe stub (10) is open towards the cover (15) and is closed towards the tail-water side by means of a base.

13. Process according to Claim 12, characterized in that the interior of the pipe stub (10) is pumped out before penetration of the pipe-stub base takes place.

14. Process according to Claim 1, characterized in that sealed steel armouring is installed in the excavated tunnel (20).

15. Process according to Claim 14, characterized in that the steel armouring is installed in the tunnel (20) in a frictionally locking manner by means of annular-space injection filling.

## Revendications

1. Procédé de réalisation d'une conduite d'eau à travers un barrage, en particulier en béton ou en maçonnerie, sous pression d'eau,
dans lequel, à partir du côté air ou aval, on réalise une galerie (20) à travers le barrage (1) jusqu'à une distance de sécurité (s) de la paroi avant du barrage qui exclut toute irruption d'eau,
caractérisé
en ce que l'on applique de façon étanche sur la paroi amont du barrage, avant d'atteindre la distance de sécurité (s) ou lorsqu'on atteint cette distance, un couvercle (15) formant obturateur étanche à l'emplacement prévu de l'ouverture d'entrée d'eau de la galerie, et on réalise l'étanchéité de ce couvercle, dans sa région marginale, par rapport à la paroi du barrage (1),
on poursuit la réalisation de la galerie (20) jusqu'au couvercle (15), et
on éloigne de nouveau le couvercle (15) de l'ouverture d'entrée d'eau, pour permettre cette entrée.

2. Procédé suivant la revendication 1, caractérisé en ce que, en respectant une distance de sécurité entre l'extrémité de la galerie (21) et le couvercle (15), on réalise tout d'abord au moins un perçage d'équilibrage grâce auquel le côté arrière du couvercle, isolé de façon étanche, est mis en communication avec la pression de l'air régnant sur le côté air ou côté aval.

3. Procédé suivant la revendication 2, caractérisé en ce que, en respectant une distance de sécurité (s) par rapport au couvercle (15), on consolide le front (21) de la galerie à réaliser, par injection d'une matière durcissante dans la paroi périphérique de la galerie.

4. Procédé suivant la revendication 1, caractérisé en ce que, pour mettre en place le couvercle (15) sur le barrage (1), on réalise et on étanchéifie une coquille de parement (8) comportant un anneau d'appui (12).

5. Procédé suivant la revendication 4, caractérisé en ce que la coquille de parement (8) est ensuite pourvue d'un évidement à l'emplacement de l'anneau (12) d'appui du couvercle (15).

6. Procédé suivant la revendication 4 ou 5, caractérisé en ce que, pour aligner l'anneau (12) d'appui du couvercle (15), on réalise un ouvrage auxiliaire (7).

7. Procédé suivant la revendication 1, caractérisé en ce que l'on déplace le couvercle (15) d'une position d'obturation étanche à une position de repos et inversement.

8. Procédé suivant la revendication 7, caractérisé en ce que, après réalisation de la galerie (20) à travers le barrage (1), on utilise le couvercle (15) en tant qu'obturateur de révision ou d'urgence.

9. Procédé suivant la revendication 1, caractérisé en ce qu'une porte de sécurité (26) est réalisée dans la galerie (20), près de son côté aval.

10. Procédé suivant la revendication 5, caractérisé en ce qu'on réalise l'évidement de la coquille de parement (8) sous la forme d'un coffrage perdu, au moyen d'une conduite tubulaire (10).

11. Procédé suivant la revendication 10, caractérisé en ce qu'on utilise la conduite tubulaire (10) en acier en tant que blindage pour la conduite d'eau d'entraînement ultérieure.

12. Procédé suivant la revendication 10 ou 11, caractérisé en ce que le coffrage constitué par la conduite tubulaire (10) est ouvert vers le couvercle (15) et est fermé, vers le côté aval, par un fond.

13. Procédé suivant la revendication 12, caractérisé en ce qu'on assèche l'espace intérieur de la conduite tubulaire (10) avant la traversée du fond de cette conduite tubulaire.

14. Procédé suivant la revendication 1, caractérisé en ce qu'on installe dans la galerie réalisée (20) un blindage étanche en acier.

15. Procédé suivant la revendication 14, caractérisé en ce que l'on installe le blindage d'acier dans la galerie (20) avec une liaison par adhérence, au moyen d'une injection sous pression.
